# EUROPEAN PATENT SPECIFICATION

(11) **EP 2 787 418 B1**
(45) Date of publication and mention of the grant of the patent: **29.04.2020**
(21) Application number: 12853919.4
(22) Date of filing: 10.11.2012
(51) Int. Cl.: G06F 3/044

(54) **TOUCH-CONTROL SENSING PANEL**
BERÜHRUNGSGESTEUERTE ERFASSUNGSTAFEL
PANNEAU DE DÉTECTION À COMMANDE TACTILE

(30) Priority: 29.11.2011 CN 201110402505
(43) Date of publication of application: 08.10.2014
(73) Proprietor: TPK Touch Solutions (Xiamen) Inc., Xiamen, Fujian 361009 (CN)
(72) Inventor: LEE, Yuhwen, Zhubei Taiwan 302 (TW); YANG, Lichun, Xiamen Fujian 361009 (CN); ZHANG, Chunyong, Xiamen City 361012 Fujian R.O.C. (CN); YUAN, Qiong, Fenyi Xinyu Jiangxi 336699 (CN)
(74) Representative: Goddar, Heinz J.
(86) International application number: PCT/CN2012/084428
(87) International publication number: WO 2013/078944

(56) References cited:
- CN-A- 101 989 160
- CN-A- 102 087 566
- CN-A- 102 169 395
- CN-U- 201 725 318
- CN-U- 202 453 848
- JP-A- 2011 090 443
- TW-A- 201 140 193
- US-A1- 2011 032 207
- US-A1- 2011 193 799
- US-A1- 2011 254 804
- William W. Coblentz: "The reflecting power of various metals", Bulletin of the Bureau Of Standards, 28 May 1910 (1910-05-28), pages 197-225, XP55590664, Washington DC, USA Retrieved from the Internet: URL:https://nvlpubs.nist.gov/nistpubs/bull etin/07/nbsbulletinv7n2p197_A2b.pdf [retrieved on 2019-05-21]

## Description

### BACKGROUND

### TECHNICAL FIELD

The present disclosure relates to a touch input device. More particularly, the present disclosure relates to a touch sensing panel.

### DESCRIPTION OF THE RELATED ART

A touch sensing panel usually comprises a substrate, first sensing pads arranged along a first axis, and second sensing pads arranged along a second axis on the substrate. Two adjacent first sensing pads are connected by a conductive wire. Two adjacent second sensing pads are disposed respectively at two sides of the conductive wire and connected by a bridging wire that crosses over the conductive wire, wherein the bridging wire is electrically insulated from the conductive wire. The bridging wires are usually made of a metal material with a comparatively high reflectivity. Therefore, when using the touch sensing panel, the bridging wires reflect light from the external world, which may cause appearance of light spots on the screen of the touch sensing panel, affecting image quality.

TW 201140193 A discloses a touch panel comprising a transparent substrate, a first sensing series comprising a plurality of first sensing pads mutually connected by first bridge wires, and a second sensing series that comprises a plurality of second sensing pads mutually connected by second bridge wires. An antireflective layer may be formed on the second bridge wires. The antireflective layer may be of a dark conductive metal such as ITO, TiN, TlAlCN, TiAlN, NbO, NbN, NbZOx, TiC, SiC or WC, of a dark conductive material, or of a dark insulating material, such as CuO, Coo, WO₃, MoO₃, CrO, CrON. Nb₂O₅, Nb₂O_{X} or TIOx.

### SUMMARY OF THE INVENTION

In view of the above problem of the prior art, an object of the present disclosure is to provide a touch sensing panel by disposing bridging wires that have top surfaces with low reflectivity in the touch sensing panel so as to reduce reflection ability of the bridging wires, thereby reducing the influence of above-mentioned light spots in image quality.

A first aspect of the invention refers to a a touch sensing panel according to claim 1. A further aspect of the invention refers to a touch sensing panel according to claim 7. Preferred embodiments of the invention are defined in the appended dependent claims.

The sensing pattern layer may comprise a plurality of first sensing pads arranged along a first axis and a plurality of second sensing pads arranged along a second axis. The plurality of first sensing pads are connected by the bridging wires to form first sensing arrays and the plurality of second sensing pads may be connected by connection parts to form second sensing arrays, wherein the first sensing arrays may be insulated from the second sensing arrays.

Based on the above-mentioned embodiments, reflectivity of top surfaces of the bridging wires is comparatively low, and therefore light from the external sources is not easily reflected by the bridging wires, thereby reducing the influence of light spots in image quality.

### BRIEF DESCRIPTION OF THE DRAWINGS

For those skilled in the art to understand the present disclosure, numerous embodiments are described below, annexing drawings to minutely illustrate the matters of the disclosure and the purpose thereof.
FIG. 1A is a schematic top view of a touch sensing panel in accordance with a first embodiment of the present disclosure;
FIG. 1B is a schematic sectional view of the touch sensing panel sectioned along a line I-I shown in FIG. 1A;
FIG. 2 is a schematic sectional view of a touch sensing panel in accordance with a second embodiment of the present disclosure; and
FIG. 3 is a schematic sectional view of a touch sensing panel in accordance with a third embodiment of the present disclosure.

### DETAILED DESCRIPTION OF THE EMBODIMENTS

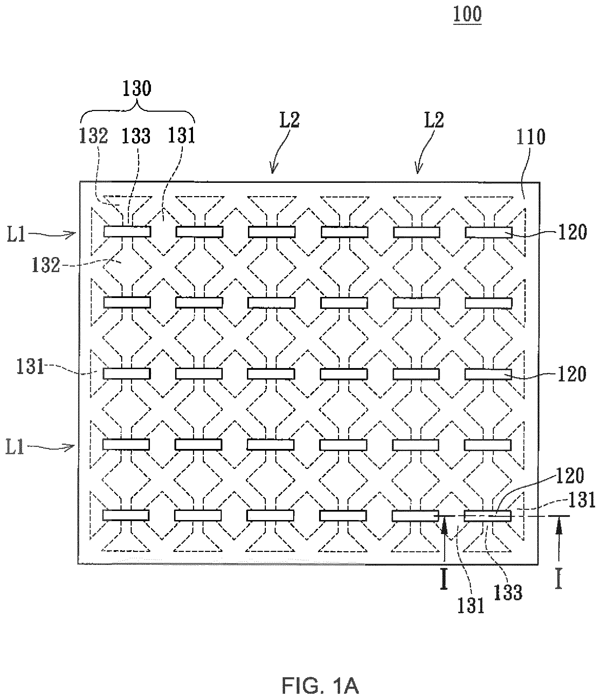

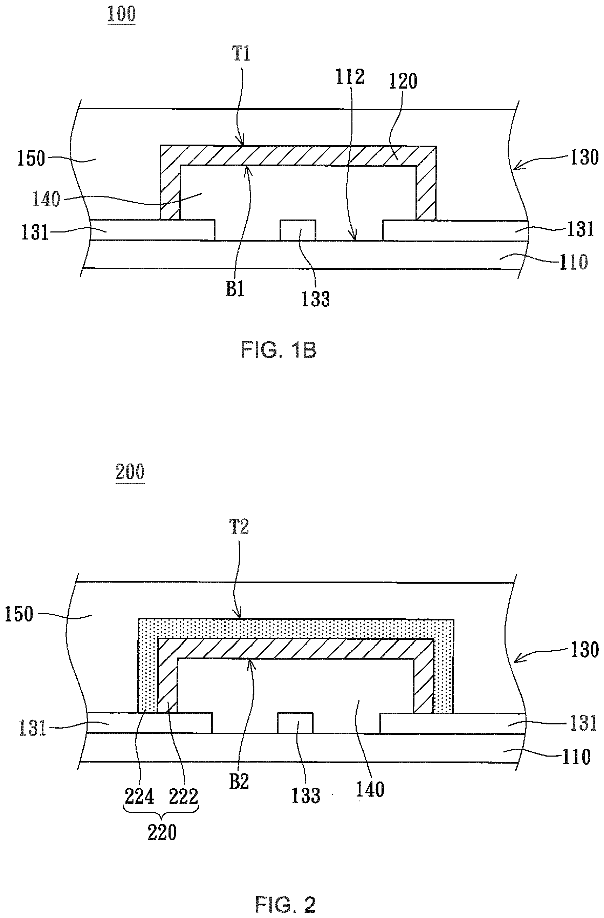

FIG. 1A is a schematic top view of a touch sensing panel in accordance with a first embodiment of the present disclosure and FIG. 1B is a schematic sectional view of the touch sensing panel sectioned along a line I-I shown in FIG. 1A. Referring to FIG. 1A and FIG. 1B, a touch sensing panel 100 comprises a transparent substrate 110, a plurality of bridging wires 120, and a sensing pattern layer 130. The transparent substrate 110 has a flat surface 112 and the sensing pattern layer 130 is disposed between the bridging wires 120 and the flat surface 112, wherein the transparent substrate 110 is a glass plate or a transparent plastic plate.

The sensing pattern layer 130 comprises a plurality of first sensing pads 131 arranged along a first axis, a plurality of second sensing pads 132 arranged along a second axis and a plurality of connection parts 133, wherein the first sensing pads 131, the second sensing pads 132, and the connection parts 133 are all disposed on the flat surface 112. The bridging wires 120 connect the adjacent two first sensing pads 131 respectively to form a plurality of first sensing arrays L1 paralleled to each other; the connection parts 133 connect the adjacent two second sensing pads 132 respectively to form a plurality of second sensing arrays L2 paralleled to each other; and the first sensing arrays L1 are electrically insulated from the second sensing arrays L2.

The first sensing arrays L1 are interlaced with the second sensing arrays L2, wherein each connection part 133 is located right under one of the bridging wires 120. Thus, the connection parts 133 are interlaced with the bridging wires 120 respectively. Besides, the sensing pattern layer 130 can be made of a transparent conductive film, wherein the transparent conductive film can be indium tin oxide (ITO) or indium zinc oxide (IZO), and the first sensing pads 131, the second sensing pads 132, and the connection parts 133 can be made of the transparent conductive film by photolithography and etching.

Each bridging wire 120 has a top surface T1 and a bottom surface B1 corresponding to the top surface T1. The bottom surface B1 faces the flat surface 112 such that the bottom surface B1 is located between the flat surface 112 and the top surface T1. Each bridging wire 120 is made of a single-layer structure and can be a metal material layer, namely, the bridging wires 120 can be conductive wires made of a metal material. Material of the bridging wires 120 can be metal, metal nitride or metal oxide with a comparatively low reflectivity, including gold, copper, nickel, tungsten or their alloys. These metal, metal nitride and metal oxide are black or dark grey in color and have comparatively low reflectivity, and therefore the reflectivity of top surface T1 is also comparatively low. Meanwhile, in other embodiments, the top surface T1 can also be made of other non-black or non-dark grey material as long as it can absorb light and avoid light reflection.

Moreover, the touch sensing panel 100 further comprises an insulation sheet 140 and a protection layer 150, wherein the insulation sheet 140 is disposed between the connection part 133 and the bridging wire 120 such that the connection part 133 is electrically insulated from the bridging wire 120, and the protection layer 150 covers the bridging wire 120 and the sensing pattern layer 130. The bridging wire 120 can be disposed on and crosses over the insulation sheet 140. Due to comparatively low reflectivity of the top surface T1, light from the external sources is not easily reflected by the bridging wire 120, thereby restraining the generation of light spots and reducing the number of light spots. Thus, the influence of light spots in image quality can be reduced and image quality of a touch display can be maintained or improved.

FIG. 2 is a schematic sectional view of a touch sensing panel 200 in accordance with a second embodiment of the present disclosure. Referring to FIG. 2, structure of the touch sensing panel 200 of the second embodiment is similar to that of the touch sensing panel 100 of the first embodiment. For example, the touch sensing panel 100 and the touch sensing panel 200 both comprise a transparent substrate 110, a sensing pattern layer 130, an insulation sheet 140, and a protection layer 150. Thus, difference between the touch sensing panel 100 and the touch sensing panel 200 is mainly described below, and the same technical features of the touch sensing panel 100 and the touch sensing panel 200 are not repeatedly illustrated.

The difference between the touch sensing panel 100 and the touch sensing panel 200 lies in that: a plurality of bridging wires 220 of the touch sensing panel 200 are of a multi-layer structure and not of a single-layer structure. Specifically, each bridging wire 220 is of a double-layer structure and comprises a conductive layer 222 and an anti-reflective layer 224, wherein the conductive layer 222 is of a single-layer structure and can be a metal layer, such as an aluminum metal layer or a molybdenum metal layer. The anti-reflective layer 224 is disposed on the conductive layer 222 such that top surface T2 of the bridging wire 220 is the top surface of the anti-reflective layer 224 and bottom surface B2 of the bridging wire 220 is the bottom surface of the conductive layer 222.

Reflectivity of the anti-reflective layer 224 is comparatively low when compared to that of the conductive layer 222 and the insulation layer 140, thereby resulting in decrease of reflectivity of the top surface T2 of the bridging wire 220. Thus, the bridging wires 220 have an effect identical to that of the first embodiment, namely, light from the external sources is not easily reflected by the bridging wires 220, thereby restraining the generation of light spots. Besides, the anti-reflective layer 224 can be a non-transparent layer; for example, the color of anti-reflective layer 224 can be black or dark grey. Therefore, the anti-reflective layer 224 has a feature of light shielding.

The anti-reflective layer 224 can be made of an insulating material or a conductive material, so the anti-reflective layer 224 can be an insulating material layer or a conductive material layer. If the anti-reflective layer 224 is an insulating material layer, it can be made of black or other dark coatings. If the anti-reflective layer 224 is a conductive material layer, it can be made of a material identical to that of the bridging wires 120, namely, the anti-reflective layer 224 can be made of a material with a comparatively low reflectivity metal such as, copper, nickel, tungsten or their alloys, metal nitride or metal oxide, etc., and formed on the top surface of the conductive layer by sputtering or other methods. The anti-reflective layer 224 can also be made of a black or dark photoresistive material and coated on the top surface of the conductive layer by spin coating, roll coating, spraying or slit coating, etc.

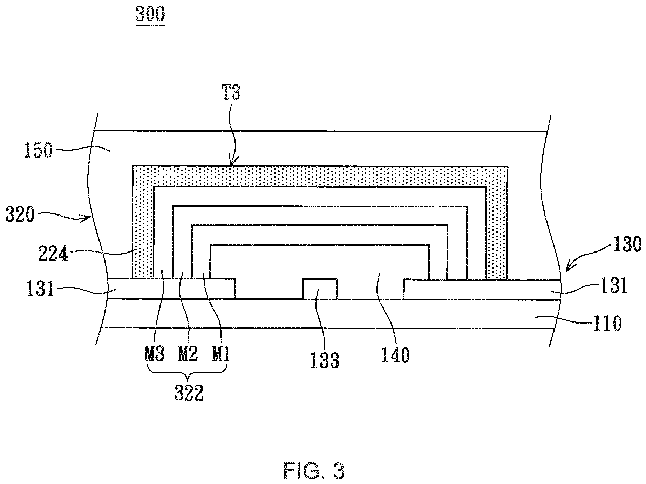

FIG. 3 is a schematic sectional view of a touch sensing panel 300 in accordance with a third embodiment of the present disclosure. Referring to FIG. 3, structure of the touch sensing panel 300 of the third embodiment is similar to that of the touch sensing panel 200 of the second embodiment. For example, the touch sensing panel 200 and the touch sensing panel 300 both comprise a transparent substrate 110, a sensing pattern layer 130, an insulation sheet 140, a protection layer 150, and a plurality of bridging wires 320 of the touch sensing panel 300 are also of a multi-layer structure. Thus, the difference between the touch sensing panel 200 and the touch sensing panel 300 is mainly described below, and the same technical features of the touch sensing panel 200 and the touch sensing panel 300 are not repeatedly illustrated.

For the difference between the touch sensing panel 200 and the touch sensing panel 300, although each bridging wire 320 comprises an anti-reflective layer 224 and a conductive layer 322, the conductive layer 322 is of a multi-layer structure but not of a single-layer structure. Specifically, the conductive layer 322 comprises a first metal layer M1, a second metal layer M2 and a third metal layer M3. The first metal layer M1 is disposed on the insulation sheet 140; the second metal layer M2 is disposed on the first metal layer M1; and the third metal layer M3 is disposed on the second metal layer M2. The anti-reflective layer 224 is disposed on the third metal layer M3.

It can be seen that the second metal layer M2 and the third metal layer M3 are located between the first metal layer M1 and the anti-reflective layer 224. The third metal layer M3 is disposed between the second metal layer M2 and the anti-reflective layer 224. In other words, the anti-reflective layer 224, the third metal layer M3, the second metal layer M2, and the first metal layer M1 are stacked on the transparent substrate 110 in order from up to down.

Reflectivity of the anti-reflective layer 224 is comparatively low to that of reflectivity of the first metal layer M1, the second metal layer M2, the third metal layer M3, and the insulation layer 140, thereby resulting in decrease of reflectivity of the top surface T3 of the bridging wire 320. Thus, in the present embodiment, light from the external sources is also not easily reflected by the bridging wires 320, thereby restraining the generation of light spots.

To sum up, for the touch sensing panels illustrated in the above embodiments, proper materials are used to reduce reflectivity of the top surfaces of the bridging wires such that light from the external sources is not easily reflected by the bridging wires, thereby reducing the number of light spots, reducing the influence of light spots in image quality, and maintaining or improving image quality of a touch display.

While certain embodiments have been shown and described, various modifications and substitutions may be made thereto. Therefore, it is to be understood that the present disclosure has been described by way of illustration and not limitations.

## Claims

1. A touch sensing panel (100), comprising:
a sensing pattern layer (130) at least comprising a plurality of first sensing pads (131) arranged along an axis; and
a plurality of bridging wires (120) electrically connecting the first sensing pads (131), wherein each bridging wire (120) has a top surface (Ti) with low reflectivity, and wherein each bridging wire (120) is of a single-layer structure;
**characterised in that** the material of the plurality of bridging wires (120) is nickel or a nickel alloy, a metal nitride or oxide, wherein the metal is one of nickel, tungsten or one of their alloys.

2. The touch sensing panel as claimed in claim 1, further comprising a substrate (110), wherein the sensing pattern layer (130) is disposed on the substrate (110).

3. The touch sensing panel as claimed in claim 1, wherein the sensing pattern layer (130) further comprises a plurality of second sensing pads (132) arranged along a second axis, the plurality of first sensing pads being electrically connected by the bridging wires (120) to form first sensing arrays (Li), the plurality of second sensing pads (132) being connected by connection parts (133) to form second sensing arrays (L2), and the first sensing arrays (L1) being insulated from the second sensing arrays (L2).

4. The touch sensing panel as claimed in claim 3, further comprising an insulation sheet (140) disposed between the connection part (133) and the bridging wire (120) such that the connection part (133) is electrically insulated from the bridging wire (120).

5. The touch sensing panel as claimed in claim 1, further comprising a protection layer (150) covering the bridging wire (120) and the sensing pattern layer (130).

6. The touch sensing panel as claimed in claim 1, wherein color of the top surfaces (T1) of the plurality of bridging wires (120) is black or dark grey.

7. A touch sensing panel (200; 300), comprising:
a sensing pattern layer (130) at least comprising a plurality of first sensing pads (131) arranged along an axis; and
a plurality of bridging wires (220; 320) electrically connecting the first sensing pads (131), wherein each bridging wire (220; 320) has a top surface (T2; T3) with low reflectivity, wherein each bridging wire (220; 320) is of a multi-layer structure;
wherein each bridging wire (220; 320) at least comprises:
a conductive layer (222; 322); and
an anti-reflective layer (224) disposed on the conductive layer (222; 322);
wherein the anti-reflective layer (224) is a conductive material, **characterised in that** the material of the anti-reflective layer (224) is nickel or one of the alloys of nickel or tungsten.

8. The touch sensing panel as claimed in claim 7, wherein color of the anti-reflective layer (224) is black or dark grey.

9. The touch sensing panel (200) as claimed in claim 7, wherein the conductive layer (222) is of a single-layer structure.

10. The touch sensing panel (300) as claimed in claim 7, wherein the conductive layer (322) is of a multi-layer structure.

11. The touch sensing panel (300) as claimed in claim 10, wherein the conductive layer (322) at least comprises:
a first metal layer (M1); and
a second metal layer (M2) disposed on the first metal layer (M1) and located between the first metal layer (M1) and the anti-reflective layer (224).

12. The touch sensing panel as claimed in claim 11, wherein the material of the first metal layer (M1) is one of aluminum, molybdenum, gold, copper, nickel, tungsten or one of their alloys and wherein material of the second metal layer is one of aluminum, molybdenum, gold, copper, nickel, tungsten or one of their alloys.

13. The touch sensing panel as claimed in claim 11, wherein the conductive layer further comprises a third metal layer (M3) disposed between the second metal layer (M2) and the anti-reflective layer (224), and wherein the anti-reflective layer (224) is disposed on the third metal layer (M3).

14. The touch sensing panel as claimed in claim 13, wherein material of the third metal layer (M3) is one of aluminum, molybdenum, gold, copper, nickel, tungsten or one of their alloys.

## Patentansprüche

1. Berührungsempfindliches Eingabefeld (100), das Folgendes umfasst:
eine Abtastmusterschicht (130), die zumindest eine Vielzahl von ersten Abtastpads (131) umfasst, die entlang einer Achse angeordnet sind; und
eine Vielzahl von Brückenleitungen (120), die die ersten Abtastpads (131) elektrisch verbinden, wobei jede Brückenleitung (120) eine obere Oberfläche (T1) mit geringer Reflektivität aufweist, und wobei jede Brückenleitung (120) eine einschichtige Struktur aufweist;
**dadurch gekennzeichnet, dass** das Material der Vielzahl von Brückenleitungen (120) Nickel oder eine Nickellegierung, ein Metallnitrid oder Metalloxid ist, wobei das Metall Nickel, Wolfram oder eine der Legierungen davon ist.

2. Berührungsempfindliches Eingabefeld nach Anspruch 1, die ferner ein Substrat (110) aufweist, wobei die Abtastmusterschicht (130) auf dem Substrat (110) angeordnet ist.

3. Berührungsempfindliches Eingabefeld nach Anspruch 1, wobei die Abtastmusterschicht (130) ferner eine Vielzahl von zweiten Abtastpads (132) aufweist, die entlang einer zweiten Achse angeordnet sind, wobei die Vielzahl von ersten Abtastpads durch die Brückenleitungen (120) elektrisch verbunden sind, um erste Abtastanordnungen (L1) zu bilden, wobei die Vielzahl von zweiten Abtastpads (132) durch Verbindungselemente (133) verbunden sind, um zweite Abtastanordnungen (L2) zu bilden, und wobei die ersten Abtastanordnungen (L1) von den zweiten Abtastanordnungen (L2) isoliert sind.

4. Berührungsempfindliches Eingabefeld nach Anspruch 3, das ferner eine zwischen dem Verbindungsteil (133) und der Brückenleitung (120) angeordnete Isolationsfolie (140) umfasst, so dass das Verbindungsteil (133) von der Brückenleitung (120) elektrisch isoliert ist.

5. Berührungsempfindliches Eingabefeld nach Anspruch 1, das ferner eine Schutzschicht (150) aufweist, die die Brückenleitung (120) und die Abtastmusterschicht (130) bedeckt.

6. Berührungsempfindliches Eingabefeld nach Anspruch 1, wobei die Farbe der oberen Oberflächen (T1) der Vielzahl von Brückenleitungen (120) schwarz oder dunkelgrau ist.

7. Berührungsempfindliches Eingabefeld (200; 300), das Folgendes umfasst:
eine Abtastmusterschicht (130), die mindestens eine Vielzahl von ersten Abtastpads (131) umfasst, die entlang einer Achse angeordnet sind; und
eine Vielzahl von Brückenleitungen (220; 320), die die ersten Abtastpads (131) elektrisch verbinden, wobei jede Brückenleitung (220; 320) eine obere Oberfläche (T2; T3) mit geringer Reflektivität aufweist, wobei jede Brückenleitung (220; 320) eine Mehrschichtstruktur aufweist;
wobei jede Brückenleitung (220; 320) mindestens Folgendes umfasst:
eine leitfähige Schicht (222; 322); und
eine Antireflexionsschicht (224), die auf der leitfähigen Schicht (222; 322) angeordnet ist;
wobei die Antireflexionsschicht (224) ein leitfähiges Material ist, **dadurch gekennzeichnet, dass** das Material der Antireflexionsschicht (224) Nickel oder eine der Legierungen von Nickel oder von Wolfram ist.

8. Berührungsempfindliches Eingabefeld nach Anspruch 7, wobei die Farbe der Antireflexionsschicht (224) schwarz oder dunkelgrau ist.

9. Berührungsempfindliches Eingabefeld (200) nach Anspruch 7, wobei die leitfähige Schicht (222) einschichtig ist.

10. Berührungsempfindliches Eingabefeld (300) nach Anspruch 7, wobei die leitfähige Schicht (322) mehrschichtig ist.

11. Berührungsempfindliches Eingabefeld (300) nach Anspruch 10, wobei die leitfähige Schicht (322) zumindest Folgendes umfasst:
eine erste Metallschicht (M1); und
eine zweite Metallschicht (M2), die auf der ersten Metallschicht (M1) angeordnet ist und zwischen der ersten Metallschicht (M1) und der Antireflexionsschicht (224) liegt.

12. Berührungsempfindliches Eingabefeld nach Anspruch 11, wobei das Material der ersten Metallschicht (M1) Aluminium, Molybdän, Gold, Kupfer, Nickel, Wolfram oder eine der Legierungen davon ist, und wobei das Material der zweiten Metallschicht Aluminium, Molybdän, Gold, Kupfer, Nickel, Wolfram oder eine der Legierungen davon ist.

13. Berührungsempfindliches Eingabefeld nach Anspruch 11, wobei die leitfähige Schicht ferner eine dritte Metallschicht (M3) umfasst, die zwischen der zweiten Metallschicht (M2) und der Antireflexionsschicht (224) angeordnet ist, und wobei die Antireflexionsschicht (224) auf der dritten Metallschicht (M3) angeordnet ist.

14. Berührungsempfindliches Eingabefeld nach Anspruch 13, wobei das Material der dritten Metallschicht (M3) Aluminium, Molybdän, Gold, Kupfer, Nickel, Wolfram oder eine der Legierungen davon ist.

## Revendications

1. Panneau de détection à commande tactile (100), comprenant :
une couche de motif de détection (130) comprenant au moins une pluralité de premiers plots de détection (131) disposés le long d'un axe ; et
une pluralité de fils de liaison (120) qui relient électriquement les premiers plots de détection (131), dans lequel chaque fil de liaison (120) possède une surface supérieure (T₁) à faible réflectivité, et dans lequel chaque fil de liaison (120) ne possède qu'une seule couche ;
**caractérisé en ce que** le matériau de la pluralité de fils de liaison (120) est du nickel ou un alliage de nickel, un nitrure ou un oxyde de métal, dans lequel le métal est l'un de nickel, de tungstène ou l'un de leurs alliages.

2. Panneau de détection à commande tactile selon la revendication 1, comprenant en outre un substrat (110), dans lequel la couche de motif de détection (130) est disposée sur le substrat (110).

3. Panneau de détection à commande tactile selon la revendication 1, dans lequel la couche de motif de détection (130) comprend en outre une pluralité de seconds plots de détection (132) disposés le long d'un second axe, les premiers plots de détection étant reliés électriquement par les fils de liaison (120) afin de former des premiers réseaux de détection (L₁), les seconds plots de détection (132) étant reliés par des parties de connexion (133) afin de former des seconds réseaux de détection (L2), et les premiers réseaux de détection (L₁) étant isolés des seconds réseaux de détection (L₂).

4. Panneau de détection à commande tactile selon la revendication 3, comprenant en outre une couche d'isolation (140) disposée entre la partie de connexion (133) et le fil de liaison (120) de sorte que la partie de connexion (133) soit électriquement isolée du fil de liaison (120).

5. Panneau de détection à commande tactile selon la revendication 1, comprenant en outre une couche de protection (150) qui recouvre le fil de liaison (120) et la couche de motif de détection (130).

6. Panneau de détection à commande tactile selon la revendication 1, dans lequel la couleur des surfaces supérieures (T₁) de la pluralité de fils de liaison (120) est noir ou gris foncé.

7. Panneau de détection à commande (200 ; 300), comprenant :
une couche de motif de détection (130) comprenant au moins une pluralité de premiers plots de détection (131) disposés le long d'un axe ; et
une pluralité de fils de liaison (220 ; 320) qui relient électriquement les premiers plots de détection (131), dans lequel chaque fil de liaison (220 ; 320) possède une surface supérieure (T₂ ; T₃) à faible réflectivité, dans lequel chaque fil de liaison (220 ; 320) possède plusieurs couches ;
dans lequel chaque fil de liaison (220 ; 320) comprend au moins :
une couche conductrice (222 ; 322) ; et
une couche anti-réflexion (224) disposée sur la couche conductrice (222 ; 322) ;
dans lequel la couche anti-réflexion (224) est un matériau conducteur, **caractérisé en ce que** le matériau de la couche anti-réflexion (224) est du nickel ou l'un des alliages de nickel ou du tungstène.

8. Panneau de détection à commande tactile selon la revendication 7, dans lequel la couleur de la couche anti-réflexion (224) est noir ou gris foncé.

9. Panneau de détection à commande tactile (200) selon la revendication 7, dans lequel la couche conductrice (222) possède une seule couche.

10. Panneau de détection à commande tactile (300) selon la revendication 7, dans lequel la couche conductrice (322) possède plusieurs couches.

11. Panneau de détection à commande tactile (300) selon la revendication 10, dans lequel la couche conductrice (322) comprend au moins :
une première couche de métal (M₁) ; et
une seconde couche de métal (M2) disposée sur la première couche de métal (M₁) et située entre la première couche de métal (M₁) et la couche anti-réflexion (224).

12. Panneau de détection à commande tactile selon la revendication 11, dans lequel le matériau de la première couche de métal (M₁) est l'un d'aluminium, de molybdène, d'or, de cuivre, de nickel, de tungstène ou l'un de leurs alliages, et dans lequel le matériau de la seconde couche de métal est l'un d'aluminium, de molybdène, d'or, de cuivre, de nickel, de tungstène ou l'un de leurs alliages.

13. Panneau de détection à commande tactile selon la revendication 11, dans lequel la couche conductrice comprend en outre une troisième couche de métal (M₃) disposée entre la seconde couche de métal (M₂) et la couche anti-réflexion (224), et dans lequel la couche anti-réflexion (224) est disposée sur la troisième couche de métal (M₃).

14. Panneau de détection à commande tactile selon la revendication 13, dans lequel le matériau de la troisième couche de métal (M₃) est l'un d'aluminium, de molybdène, d'or, de cuivre, de nickel, de tungstène, ou l'un de leurs alliages.
